# EUROPÄISCHE PATENTSCHRIFT

(11) **EP 3 433 891 B1**
(45) Veröffentlichungstag und Bekanntmachung des Hinweises auf die Patenterteilung: **07.04.2021**
(21) Anmeldenummer: 17704477.3
(22) Anmeldetag: 13.02.2017
(51) Int. Cl.: H01M 2/20

(54) **BATTERIE UND VERFAHREN ZUR HERSTELLUNG EINER BATTERIE**
BATTERY AND METHOD FOR MANUFACTURING A BATTERY
BATTERIE ET PROCÉDÉ DE PRODUCTION D'UNE BATTERIE

(30) Priorität: 22.03.2016 DE 102016204681
(43) Veröffentlichungstag der Anmeldung: 30.01.2019
(73) Patentinhaber: Robert Bosch GmbH, 70442 Stuttgart (DE)
(72) Erfinder: SCHWEINBENZ, Jochen, 70469 Stuttgart (DE); KOHLBERGER, Markus, 70174 Stuttgart (DE)
(86) Internationale Anmeldenummer: PCT/EP2017/053138
(87) Internationale Veröffentlichungsnummer: WO 2017/162367

(56) Entgegenhaltungen:
- WO-A1-2011/154098
- DE-A1-102011 075 044
- DE-A1-102013 225 340
- DE-A1-102014 006 030
- US-A1- 2003 054 240

## Beschreibung

### Stand der Technik

Die Erfindung geht aus von einer Batterie nach Gattung des unabhängigen Anspruchs. Gegenstand der vorliegenden Erfindung ist auch ein Verfahren zur Herstellung einer solchen Batterie.

Aus dem Stand der Technik ist bekannt, dass Batterien, welche als Antriebsbatterien in Hybrid-, Plug-in-Hybrid- und Elektrofahrzeugen eingesetzt werden, wie insbesondere Lithium-Ionen-Batterien, modular aufgebaut sind, also aus einer Mehrzahl an Batteriemodulen bestehen.

Weiterhin weist ein Batteriemodul bevorzugt eine Vielzahl an einzelnen Batteriezellen auf, welche untereinander zu dem Batteriemodul verschaltet sind, wobei die einzelnen Batteriezellen seriell oder parallel miteinander verschaltet sein können. Dabei werden die Spannungsabgriffe der einzelnen Batteriezellen, wie insbesondere Lithium-Ionen-Batteriezellen, Lithium-Polymer-Batteriezellen oder Bleisäureakkumulatoren, mittels sogenannten Zellverbindern elektrisch miteinander verbunden. Die Zellverbinder werden dabei über geschraubte, geschweißte oder genietete Verbindungen an den Spannungsabgriffen der einzelnen Batteriezellen angebracht. Des Weiteren werden auch die Batteriemodule der Batterie mittels als Modulverbinder bezeichneten geschraubt, geschweißt oder genietet angebrachten Verbindungselementen elektrisch seriell und/oder parallel miteinander verbunden.

Mehrere Batteriemodule bilden als sogenannte Subunits bezeichnete Untereinheiten der Batterie, die sich beispielsweise eine gemeinsame Kühleinrichtung teilen. Eine Batterie ist üblicherweise aus wenigstens zwei Untereinheiten aufgebaut.

Bei dem Aufbau einer Batterie werden ab Spannungen von über 60 Volt Gleichstrom besondere Schutzmaßnahmen an den Berührschutz gestellt, so dass nur ausgebildeten Elektrofachkräften Arbeiten an der Batterie bei derartigen Spannungen erlaubt sind.

Aus dem Stand der Technik ist aus der DE 10 2012 215 205 A1 ein Zellverbinder bekannt, welcher zwei Batteriezellen unterschiedlicher Batteriemodule miteinander verbindet.

Weiterhin ist aus der DE 10 2012 215 495 eine Reihenschaltung mit einer Batteriezelle zur Anpassung einer Kenngröße der Batteriezelle bekannt.

DE 10 2014 006030 beschreibt eine Mehrzahl von nebeneinander angeordneten Batteriemodulen mit Spannungsabgriffen an der Moduloberseite und Modulverbindungselementen jeweils an einer Seitenfläche der Module.

### Offenbarung der Erfindung

Die Batterie und das Verfahren zur Herstellung einer solchen Batterie mit den kennzeichnenden Merkmalen der unabhängigen Ansprüche haben den Vorteil, dass zwei Batteriemodule einer Batterie auf einfache Weise und zuverlässig durch eine Steckverbindung elektrisch leitend miteinander verbunden werden können. Dadurch kann insbesondere der Aufwand während der Fertigung verringert werden, da auf die aus dem Stand der Technik bekannten geschweißten, genieteten oder geschraubten Verbindungen verzichtet werden kann.

Erfindungsgemäß wird eine Batterie aufweisend zumindest zwei Batteriemodule zur Verfügung gestellt. Dabei umfasst ein Batteriemodul jeweils eine Mehrzahl an elektrisch seriell und/oder parallel miteinander verschalteten Batteriezellen. Die Batteriezellen sind dabei insbesondere Lithium-Ionen-Batteriezellen. Weiterhin weist ein Batteriemodul einen positiven Spannungsabgriff und einen negativen Spannungsabgriff auf. Dabei ist mit dem positiven Spannungsabgriff ein erstes Modulverbindungselement elektrisch leitend verbunden und/oder mit dem negativen Spannungsabgriff ist ein zweites Modulverbindungselement elektrisch leitend verbunden. Ein Modulverbindungselement eines ersten Batteriemoduls und ein Modulverbindungselement eines zweiten Batteriemoduls sind elektrisch leitend verbunden. Dabei ist die elektrisch leitende Verbindung der Modulverbindungselemente als Steckverbindung ausgebildet.

Durch die in den abhängigen Ansprüchen aufgeführten Maßnahmen sind vorteilhafte Weiterbildungen und Verbesserungen der im unabhängigen Anspruch angegebenen Vorrichtung oder des im unabhängigen Anspruch angegeben Verfahrens möglich.

Es ist zweckmäßig, wenn die Modulverbindungselemente direkt elektrisch leitend miteinander verbunden sind. Dadurch ist es möglich, dass während des Aufbaus der Batterie das erste Batteriemodul und das zweite Batteriemodul an ihrer Position innerhalb der Batterie angeordnet werden und dabei durch Ausbildung der Steckverbindung das Modulverbindungselement des ersten Batteriemoduls und das Modulverbindungselement des zweiten Batteriemoduls elektrisch leitend miteinander verbunden sind, wodurch anschließend keine weiteren Fertigungsschritte zur Ausbildung der elektrisch leitenden Verbindung der Batteriemodule notwendig sind.

Es ist weiterhin auch zweckmäßig, wenn ein weiteres elektrisch leitendes Verbindungselement die Modulverbindungselemente elektrisch leitend miteinander verbindet. Dadurch ist es möglich, dass während des Aufbaus der Batterie das erste Batteriemodul und das zweite Batteriemodul an ihrer Position innerhalb der Batterie angeordnet werden können, ohne dabei eine elektrisch leitende Verbindung zwischen den Batteriemodulen auszubilden. Daher kann eine aus mehreren Batteriemodulen bestehende Batterie aufgebaut werden, ohne dass dabei die Batteriemodule bereits elektrisch seriell und/oder parallel miteinander verschaltet sind und somit keine erhöhten Spannungen, die über den Spannungen der einzelnen Batteriemodule liegen, auftreten, so dass keine besonderen Schutzmaßnahmen an den Berührschutz erforderlich sind, wenn die Spannung eines Batteriemoduls unter der zulässigen Spannung von 60 Volt Gleichstrom liegt. Nachdem der mechanische Aufbau der Batterie durch die Anordnung der einzelnen Batteriemodule abgeschlossen ist, kann eine Hochschaltung der Spannung erfolgen. Darunter soll verstanden sein, dass die einzelnen Batteriemodule elektrisch leitend miteinander verbunden werden. Insbesondere soll darunter verstanden sein, dass ein Modulverbindungselement des ersten Batteriemoduls und ein Modulverbindungselement des zweiten Batteriemoduls elektrisch leitend miteinander verbunden werden, wobei ein weiteres elektrisch leitendes Verbindungselement die Modulverbindungselemente elektrisch leitend miteinander verbindet.

Gemäß einer Ausführungsform der Erfindung sind zu einer seriellen Verschaltung des ersten Batteriemoduls und des zweiten Batteriemoduls das erste Modulverbindungselement des ersten Batteriemoduls und das zweite Modulverbindungselement des zweiten Batteriemoduls elektrisch leitend verbunden. Weiterhin können gemäß der einen Ausführungsform der Erfindung zu einer seriellen Verschaltung des ersten Batteriemoduls und des zweiten Batteriemoduls auch das zweite Modulverbindungselement des ersten Batteriemoduls und das erste Modulverbindungselement des zweiten Batteriemoduls elektrisch leitend verbunden sein. Dadurch sind ein positiver Spannungsabgriff und einen negativer Spannungsabgriff bzw. ein negativer Spannungsabgriff und positiver Spannungsabgriff elektrisch leitend verbunden, wodurch eine serielle Verschaltung der Batteriemodule realisiert ist.

Gemäß einer anderen Ausführungsform der Erfindung sind zu einer parallelen Verschaltung des ersten Batteriemoduls und des zweiten Batteriemoduls das erste Modulverbindungselement des ersten Batteriemoduls und das erste Modulverbindungselement des zweiten Batteriemoduls elektrisch leitend verbunden. Weiterhin können gemäß der anderen Ausführungsform der Erfindung zu einer parallelen Verschaltung des ersten Batteriemoduls und des zweiten Batteriemoduls auch das zweite Modulverbindungelement des ersten Batteriemoduls und das zweite Modulverbindungelement des zweiten Batteriemoduls elektrisch leitend verbunden sein. Dadurch sind ein positiver Spannungsabgriff mit einem positiven Spannungsabgriff bzw. ein negativer Spannungsabgriff mit einem negativen Spannungsabgriff elektrisch leitend verbunden, wodurch eine parallele Verschaltung der Batteriemodule realisiert ist.

Insbesondere weist ein Batteriemodul jeweils im Wesentlichen zwei Stirnflächen, zwei Seitenflächen, eine Batteriemodulunterseite und eine Batteriemoduloberseite auf. Die zwei Stirnflächen sind sich einander gegenüberliegend angeordnet und bevorzugt parallel zueinander. Weiterhin sind die zwei Seitenflächen sich einander gegenüberliegend angeordnet und bevorzugt parallel zueinander. Die Batteriemodulunterseite und die Batteriemoduloberseite sind sich einander gegenüberliegend angeordnet und bevorzugt parallel zueinander. Insbesondere sind eine der zwei Stirnflächen und eine der zwei Seitenflächen rechtwinklig zueinander angeordnet.
Weiterhin sind insbesondere eine der zwei Stirnflächen und die Batteriemodulunterseite bzw. die Batteriemoduloberseite rechtwinklig zueinander angeordnet. Insbesondere sind eine der zwei Seitenflächen und die Batteriemodulunterseite bzw. die Batteriemoduloberseite rechtwinklig zueinander angeordnet.
Der positive Spannungsabgriff und/oder der negative Spannungsabgriff des Batteriemoduls sind bevorzugt an der Batteriemoduloberseite angeordnet. Des Weiteren sind auch die die Mehrzahl an Batteriezellen elektrisch seriell und/oder parallel miteinander verbindenden Zellverbinder an der Batteriemoduloberseite angeordnet.
Dabei ist es zweckmäßig, wenn das erste Modulverbindungselement und/oder das zweite Modulverbindungselement an der Batteriemodulunterseite, an einer der zwei Stirnflächen oder an einer der zwei Seitenflächen angeordnet ist. Dadurch ist es möglich, dass ein Modulverbindungselement nicht an der Batteriemoduloberseite angeordnet ist, an welcher üblicherweise auch die Zellverbinder zur seriellen und/oder parallelen Verschaltung der einzelnen Batteriezellen angeordnet sind, sodass die Sicherheit beim Aufbau der Batterie erhöht werden kann. Weiterhin ist es dadurch möglich, wie im Folgenden beschrieben ist, die Zugänglichkeit der Modulverbindungselemente zu verbessern.

Vorteilhaft ist es, wenn das erste Batteriemodul und das zweite Batteriemodul nebeneinander angeordnet sind, wobei eine der zwei Stirnflächen des ersten Batteriemoduls direkt benachbart zu einer der zwei Stirnflächen des zweiten Batteriemoduls angeordnet ist und weiterhin das erste Modulverbindungselement und/oder das zweite Modulverbindungselement an einer Seitenfläche angeordnet ist. Dadurch ist es möglich, das erste Batteriemodul und das zweite Batteriemodul innerhalb einer eine Mehrzahl an Batteriemodulen aufweisenden Batterie anzuordnen, bei welcher die Mehrzahl an Batteriemodulen beispielsweise auch in mehreren Ebenen übereinander angeordnet sind, ohne die Batteriemodule bei der Anordnung bereits miteinander zu verschalten. Dabei kann die endgültige Verschaltung der Batteriemodule und somit die Hochschaltung der Spannung erst nach der Anordnung der Batteriemodule mittels des weiteren elektrisch leitenden Verbindungselements erfolgen, da die Modulverbindungselemente auch nach dem mechanischen Aufbau der Batterie noch zugänglich angeordnet sind.
Unter Batteriemodulen, welche in mehreren Ebenen übereinander angeordnet sind, soll hier verstanden sein, dass die Batteriemoduloberseite zumindest eines Batteriemoduls und die Batteriemodulunterseite eines anderen Batteriemoduls direkt benachbart zueinander angeordnet sind.
Selbstverständlich ist es auch möglich, wenn das erste Batteriemodul und das zweite Batteriemodul nebeneinander angeordnet sind, wobei eine der zwei Stirnflächen des ersten Batteriemoduls direkt benachbart zu einer der zwei Stirnflächen des zweiten Batteriemoduls angeordnet ist, das erste Modulverbindungselement und/oder das zweite Modulverbindungselement auch an der Batteriemodulunterseite oder an der Batteriemoduloberseite anzubringen, sollte die Mehrzahl an Batteriemodulen der Batterie in derselben Ebene angeordnet sein und somit auch eine Seitenfläche eines Batteriemoduls direkt benachbart zu einer Seitenfläche eines anderen Batteriemoduls angeordnet sein.

Weiterhin vorteilhaft ist es, wenn das erste Batteriemodul und das zweite Batteriemodul nebeneinander angeordnet sind, wobei eine der zwei Seitenflächen des ersten Batteriemoduls direkt benachbart zu einer der zwei Seitenflächen des zweiten Batteriemoduls angeordnet ist und weiterhin das erste Modulverbindungselement und/oder das zweite Modulverbindungselement an einer Stirnfläche angeordnet ist. Dadurch ist es möglich, bei einer Batterie, bei welcher Batteriemodule, wie eben beschrieben ist, beispielsweise in mehreren Ebenen übereinander angeordnet sind und zwei Batteriemodule insbesondere jeweils mit einer der zwei Seitenflächen direkt benachbart zueinander angeordnet sind, die Hochschaltung der Spannung erst nach dem mechanischen Aufbau der Batterie vornehmen zu können, da die Modulverbindungselemente noch zugänglich sind. Des Weiteren ist es in diesem Fall auch denkbar, dass bei der Anordnung der Batteriemodule in einer Ebene, das erste Modulverbindungselement und/oder das zweite Modulverbindungselement an der Batteriemoduloberseite oder an der Batteriemodulunterseite anzubringen, da diese auch nach dem mechanischen Aufbau der Batterie noch zugänglich sind.

Des Weiteren ist es auch vorteilhaft, wenn das erste Batteriemodul und das zweite Batteriemodul nebeneinander angeordnet sind, wobei die Batteriemoduloberseite des ersten Batteriemoduls direkt benachbart zu der Batteriemodulunterseite des zweiten Batteriemoduls angeordnet ist und weiterhin das erste Modulverbindungselement und/oder das zweite Modulverbindungselement an einer der zwei Stirnflächen oder an einer der zwei Seitenflächen angeordnet sind. Dadurch ist es möglich, das erste Batteriemodul und das zweite Batteriemodul, in übereinander liegenden Ebenen einer eine Mehrzahl an Batteriemodulen aufweisenden Batterie anzuordnen, und auf einfache Weise erst nach der mechanischen Anordnung der Batteriemodule diese elektrisch leitend zu verbinden. Insbesondere kann die elektrisch leitende Verbindung als Steckverbindung des ersten Modulverbindungselements und des zweiten Modulverbindungselements mittels des weiteren elektrisch leitenden Verbindungselements ausgebildet sein.

Durch die eben beschriebenen vorteilhaften Anordnungsmöglichkeiten des ersten Modulverbindungselements und/oder des zweiten Modulverbindungselements an einer der zwei Stirnflächen, an einer der zwei Seitenflächen oder an der Batteriemodulunterseite, oder insbesondere auch an der Batteriemoduloberseite, kann auf einfache und sichere Weise eine Batterie bereitgestellt werden, welche eine Mehrzahl an Batteriemodulen aufweist. Die Mehrzahl an Batteriemodulen kann dabei in mehreren Ebenen übereinander angeordnet sein, wobei in jeder Ebene auch eine Mehrzahl an Batteriemodulen angeordnet sein kann. Bevorzugt ist es dabei, die Batteriemodule erst innerhalb der Batterie an ihrer Position anzuordnen und somit den mechanischen Gesamtaufbau der Batterie auszubilden und in einem nachfolgenden Schritt dann die elektrisch leitenden Verbindungen zur seriellen und/oder parallelen Verbindung der einzelnen Batteriemodule auszubilden. Da das erste Modulverbindungselement und/oder das zweite Modulverbindungselement an einer der zwei Stirnflächen, an einer der zwei Seitenflächen oder an der Batteriemodulunterseite, oder insbesondere auch an der Batteriemoduloberseite angeordnet sein können, ist es möglich, das Modulverbindungselement so anzuordnen, dass dieses auch nach dem mechanischen Gesamtaufbau der Batterie noch zugänglich ist. Dabei kann dann durch das weitere elektrisch leitende Verbindungselement die elektrische Verschaltung realisiert werden. Insbesondere bei Batteriemodulen, bei welchen die Gesamtspannung unterhalb von beispielsweise 60 Volt Gleichspannung liegt, ist nur der letzte Schritt der Hochschaltung der Spannung durch die Ausbildung der elektrisch leitenden Verbindungen zwischen den einzelnen Batteriemodulen von einer ausgebildeten Elektrofachkraft mit entsprechenden Sicherheitskenntnissen durchzuführen.

Zweckmäßigerweise umfasst ein Modulverbindungselement jeweils ein aus einem elektrisch isolierenden Material ausgebildetes Gehäuse. Dadurch können der positive Spannungsabgriff und der negative Spannungsabgriff des Batteriemoduls elektrisch isoliert werden, um ungewollte Kurzschlüsse oder elektrische Kontaktierungen vermeiden zu können. Weiterhin umfasst ein Modulverbindungselement einen elektrisch leitenden Verbindungsabschnitt, welcher in dem elektrisch isolierenden Gehäuse angeordnet ist. Der Verbindungsabschnitt ist weiterhin elektrisch leitend mit dem positiven oder dem negativen Spannungsabgriff des jeweiligen Batteriemoduls verbunden.
Dabei sind zu einer elektrisch leitenden Verbindung des ersten Batteriemoduls und des zweiten Batteriemoduls ein erster Verbindungsabschnitt des Modulverbindungselements des ersten Batteriemoduls und ein zweiter Verbindungsabschnitt des Modulverbindungselements des zweiten Batteriemoduls elektrisch leitend miteinander verbunden. Die Verbindung des ersten Verbindungsabschnitts und des zweiten Verbindungsabschnitts ist dabei als Steckverbindung ausgebildet. Dabei kann zu einer direkten elektrisch leitenden Verbindung der erste Verbindungsabschnitt eine Öffnung aufweisen, in welcher der als ein Steckelement ausgebildete zweite Verbindungsabschnitt angeordnet ist. Weiterhin kann dabei der erste Verbindungsabschnitt eine Öffnung aufweisen und der zweite Verbindungsabschnitt kann eine durch das Gehäuse des den zweiten Verbindungsabschnitts aufweisenden Modulverbindungselements durchgehend verlaufende Öffnung aufweisen, wobei weiterhin das weitere elektrisch leitende Verbindungselement in der Öffnung des ersten Verbindungselements und in der Öffnung des zweiten Verbindungselements verlaufend angeordnet ist. Da der zweite Verbindungsabschnitt eine durch das Gehäuse des den zweiten Verbindungsabschnitts aufweisenden Modulverbindungselements aufweist, kann das weitere elektrisch leitende Verbindungselement auch nach der Anordnung des ersten Batteriemoduls und des zweiten Batteriemoduls nebeneinander noch den ersten Verbindungsabschnitt und den zweiten Verbindungsabschnitt elektrisch leitend miteinander verbinden.

Von Vorteil ist es, wenn das Modulverbindungselement stoffschlüssig oder formschlüssig mit dem jeweiligen Batteriemodul verbunden ist. Dabei kann diese Verbindung insbesondere geschweißt, genietet oder geklebt ausgebildet sein. Weiterhin ist es auch möglich, dass das Modulverbindungselement an dem Batteriemodul einrasten kann. Insbesondere kann das Gehäuse die Fügekräfte aufnehmen.

Ferner betrifft die Erfindung ein Verfahren zur Herstellung einer oben beschriebenen Batterie. Dabei sollen alle im Zusammenhang mit der erfindungsgemäßen Batterie erwähnten Vorteile und Weiterbildungsmöglichkeiten auch im Zusammenhang mit dem erfindungsgemäßen Verfahren weiterhin gelten, so dass zwischen dem Verfahren zur Herstellung der Batterie und der Batterie wechselseitig Bezug genommen werden kann.

In einem Verfahrensschritt a) wird eine Mehrzahl an Batteriezellen elektrisch seriell und/oder parallel zu einem ersten Batteriemodul und zu einem zweiten Batteriemodul verschaltet. Dadurch werden somit das erste Batteriemodul und das zweite Batteriemodul, welche jeweils eine Mehrzahl an seriell und/oder parallel verschalteten Batteriezellen aufweisen, zur Verfügung gestellt.
In einem Verfahrensschritt b) werden ein elektrisch leitend mit dem positiven Spannungsabgriff verbundenes erstes Modulverbindungselement und/oder ein elektrisch leitend mit dem negativen Spannungsabgriff verbundenes zweites Modulverbindungselement an dem ersten Batteriemodul und an dem zweiten Batteriemodul angeordnet. Dadurch weist das erste Batteriemodul zumindest ein erstes Modulverbindungselement oder ein zweites Modulverbindungselement auf und das zweite Batteriemodul weist zumindest ein erstes Modulverbindungselement oder ein zweites Modulverbindungselement auf, welche jeweils mit dem positiven bzw. negativen Spannungsabgriff des Batteriemoduls verbunden sind.
In einem Verfahrensschritt c) wird eine elektrisch leitende Verbindung zwischen dem Modulverbindungselement des ersten Batteriemoduls und dem Modulverbindungselement des zweiten Batteriemoduls ausgebildet. Dabei wird die elektrisch leitende Verbindung der Modulverbindungselemente als Steckverbindung ausgebildet.
Dadurch ist eine einfache serielle und/oder parallele Verschaltung des ersten Batteriemoduls und des zweiten Batteriemoduls miteinander möglich.

Des Weiteren ist es von Vorteil, wenn das erste Batteriemodul und das zweite Batteriemodul nebeneinander angeordnet werden. Dabei werden insbesondere das Modulverbindungselement des ersten Batteriemoduls und das Modulverbindungselement des zweiten Batteriemoduls nicht elektrisch leitend miteinander verbunden. Erst in einem anschließenden Verfahrensschritt d) werden die Modulverbindungselemente über das weitere elektrisch leitende Verbindungselement elektrisch leitend miteinander verbunden. Dies hat den Vorteil, wie bereits im Zusammenhang mit der erfindungsgemäßen Batterie beschrieben ist, dass zuerst der mechanische Gesamtaufbau einer eine Mehrzahl an Batteriemodulen aufweisenden Batterie erfolgen kann und in einem anschließenden Schritt die Ausbildung der elektrisch leitenden Verbindungen zwischen den einzelnen Batteriemodulen zur Hochschaltung der Spannung erfolgen kann.

Insbesondere betrifft die Erfindung ein Verfahren, bei welchem in Verfahrensschritt a) weiterhin eine Mehrzahl an eine Mehrzahl an elektrisch seriell und/oder parallel miteinander verschalteten Batteriezellen aufweisenden Batteriemodulen bereitgestellt wird. Dabei soll in Verfahrensschritt b) weiterhin an der Mehrzahl an Batteriemodulen jeweils ein mit dem positiven Spannungsabgriff elektrisch leitend verbundenes erstes Modulverbindungselement und/oder ein mit dem negativen Spannungsabgriff elektrisch leitend verbundenes zweites Modulverbindungselement angeordnet werden. Des Weiteren werden in Verfahrensschritt c) zunächst die Batteriemodule nebeneinander zu der Batterie angeordnet. In dem Verfahrensschritt d) werden dann jeweils zwei Modulverbindungselemente von nebeneinander angeordneten Batteriemodulen durch jeweils ein weiteres elektrisch leitendes Verbindungselement elektrisch leitend miteinander verbunden.

### Kurze Beschreibung der Zeichnungen

Ausführungsbeispiele der Erfindung sind in den Zeichnungen dargestellt und in der nachfolgenden Beschreibung näher erläutert.

### Es zeigen

Figur 1a eine Ausführungsform eines Batteriemoduls mit einer ersten Anordnung eines Modulverbindungselements,
Figur 1b eine Ausführungsform eines Batteriemoduls mit einer zweiten Anordnung eines Modulverbindungselements,
Figur 1c eine Ausführungsform eines Batteriemoduls mit einer dritten Anordnung eines Modulverbindungselements,
Figur 2 in einer schematischen Ansicht eine Draufsicht auf eine erfindungsgemäße Batterie,
Figur 3a eine Ausführungsform einer Steckverbindung zu einer Ausbildung einer direkten elektrisch leitenden Verbindung zwischen zwei Modulverbindungselementen und
Figur 3b eine Ausführungsform einer Steckverbindung zu einer Ausbildung einer elektrisch leitenden Verbindung zwischen zwei Modulverbindungselement mittels eines weiteren elektrisch leitenden Verbindungselements.

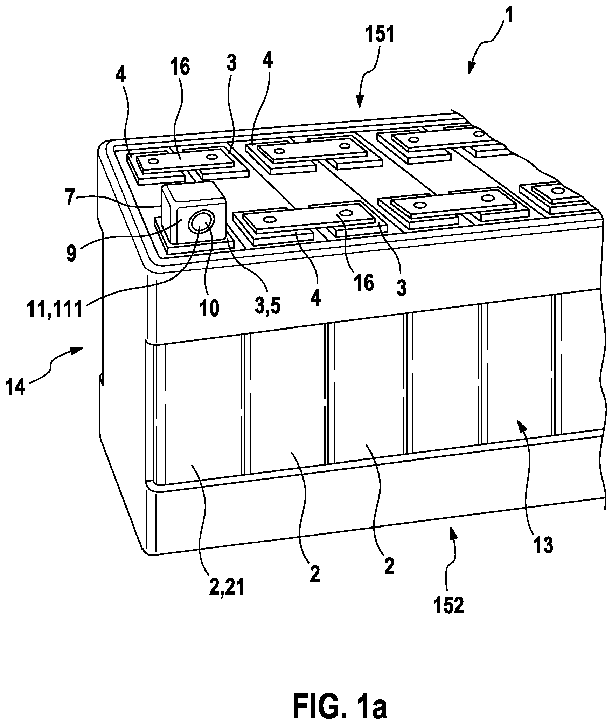

Die Figuren 1a bis 1c zeigen jeweils Ausführungsformen eines Batteriemoduls 1, welches eine Mehrzahl an nebeneinander angeordneten Batteriezellen 2 aufweist, welche bevorzugt identisch sind. Die Batteriezellen 2 weisen jeweils einen positiven Spannungsabgriff 3 und einen negativen Spannungsabgriff 4 auf. Zu einer seriellen Verschaltung der einzelnen Batteriezellen 2, wie in den Figuren 1a bis 1c gezeigt ist, sind ein positiver Spannungsabgriff 3 einer Batteriezelle 2 und ein negativer Spannungsabgriff 4 einer benachbarten Batteriezelle 2 elektrisch leitend miteinander verbunden. Diese elektrisch leitende Verbindung kann mittels aus dem Stand der Technik bekannter Zellverbinder 16 erfolgen.

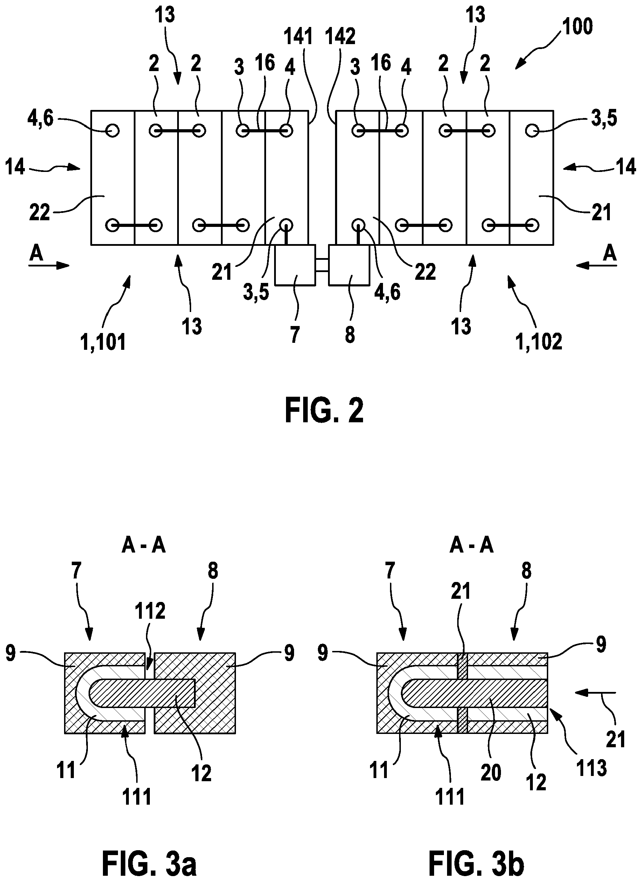

Bei der seriellen Verschaltung der Batteriezellen 2 ist der positive Spannungsabgriff 3 einer ersten Batteriezelle 21 und der negative Spannungsabgriff 4 einer letzten Batteriezelle 22 bspw. nicht mittels eines Zellverbinders 16 mit einer benachbarten Batteriezelle 2 desselben Batteriemoduls 1 verbunden. Unter der ersten Batteriezelle 21 und der letzten Batteriezelle 22 ist jeweils eine der beiden äußeren der nebeneinander angeordneten Batteriezellen 2 des Batteriemoduls 1 bezeichnet, wie auch Figur 2 noch verdeutlichen soll.

Der positive Spannungsabgriff 3 der ersten Batteriezelle 21 bildet gleichzeitig den positiven Spannungsabgriff 5 des Batteriemoduls 1 und der negative Spannungsabgriff 4 der letzten Batteriezelle 22 bildet gleichzeitig den negativen Spannungsabgriff 6 des Batteriemoduls 1.

Wie aus den Figuren 1a bis 1c zu erkennen ist, weist das Batteriemodul 1 weiterhin ein erstes Modulverbindungselement 7 auf und ein in den Figuren 1a bis 1c nicht gezeigtes zweites Modulverbindungselement 8. Der positive Spannungsabgriff 5 des Batteriemoduls 1 ist elektrisch leitend mit dem ersten Modulverbindungselement 7 verbunden. Der negative Spannungsabgriff 6 des Batteriemoduls 1 ist elektrisch leitend mit dem zweiten Modulverbindungselement 8 verbunden.

Das erste Modulverbindungselement 7 und das zweite Modulverbindungselement 8 weisen jeweils ein Gehäuse 9 aus einem elektrisch isolierenden Material auf. Des Weiteren umfasst ein Modulverbindungselement 7, 8 einen elektrisch leitenden Verbindungsabschnitt 10, welcher später anhand der Figuren 3a und 3b noch näher beschrieben ist.

Zur Ausbildung einer elektrisch leitenden Verbindung zwischen einem ersten Batteriemodul 101 und einem zweiten Batteriemodul 102 werden ein erster Verbindungsabschnitt 11 des Modulverbindungselements 7,8 des ersten Batteriemoduls 101 und ein zweiter Verbindungsabschnitt 12 des Modulverbindungselements 7,8 des zweiten Batteriemoduls 102 elektrisch leitend miteinander verbunden.

Das Batteriemodul 1 weist im Wesentlichen zwei sich einander gegenüberliegende Seitenflächen 13, zwei sich einander gegenüberliegende Stirnflächen 14, eine Batteriemoduloberseite 151 und eine zu der Batteriemoduloberseite 151 gegenüberliegende Batteriemodulunterseite 152 auf.

Wie bereits beschrieben ist, kann das erste Modulverbindungselement 7 und/oder das zweite Modulverbindungselement 8 an einer der zwei Seitenflächen 13, an einer der zwei Stirnflächen 14 oder an der Batteriemoduloberseite 151, und insbesondere auch an der Batteriemodulunterseite 152 angeordnet sein, um die erwünschten räumlichen Anordnung der Batteriemodule 1 zu ermöglichen.

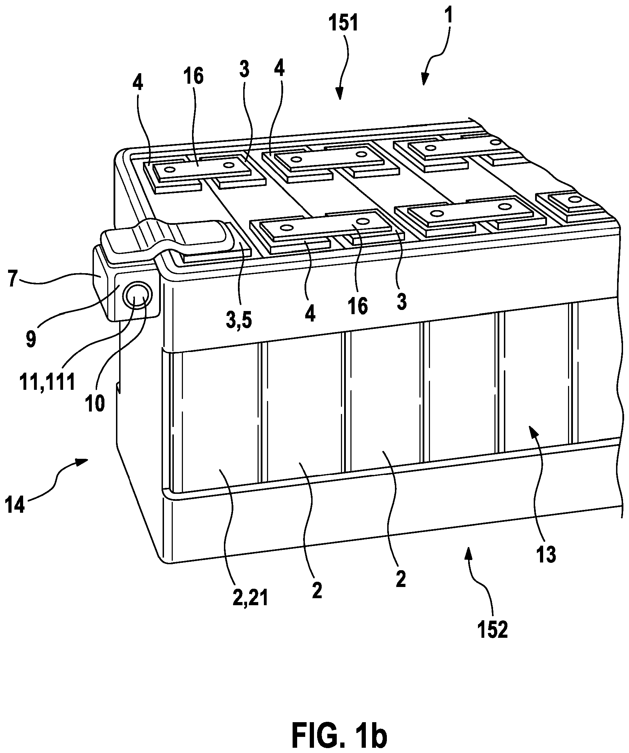

Die in der Figur 1a gezeigte Ausführungsform eines Batteriemoduls 1 ist beispielsweise vorteilhaft, wenn das Batteriemodul 1 mit einer Seitenfläche 13 benachbart zu einer Seitenfläche 13 eines anderen Batteriemoduls 1 angeordnet wird, wobei das erste Modulverbindungselement 7 an der Batteriemoduloberseite 151 angeordnet ist und wobei an der zu dem ersten Modulverbindungselement 7 benachbarten Seitenfläche 14 beispielsweise ein weiteres hier nicht gezeigtes Element der Batterie angeordnet werden soll, so dass hier keine Raum zur Verfügung steht.
Weiterhin kann in einem solchen Fall, wenn das Batteriemodul 1 mit einer Seitenfläche 13 benachbart zu einer Seitenfläche 13 eines anderen Batteriemoduls 1 angeordnet wird, wobei an der Batteriemoduloberseite 151 beispielsweise durch die Anordnung eines weiteren Batteriemoduls 1 kein Platz zur Verfügung steht, das erste Modulverbindungselement 7 auch, wie in der Figur 1b gezeigt ist, an einer Stirnfläche 14 angeordnet werden.

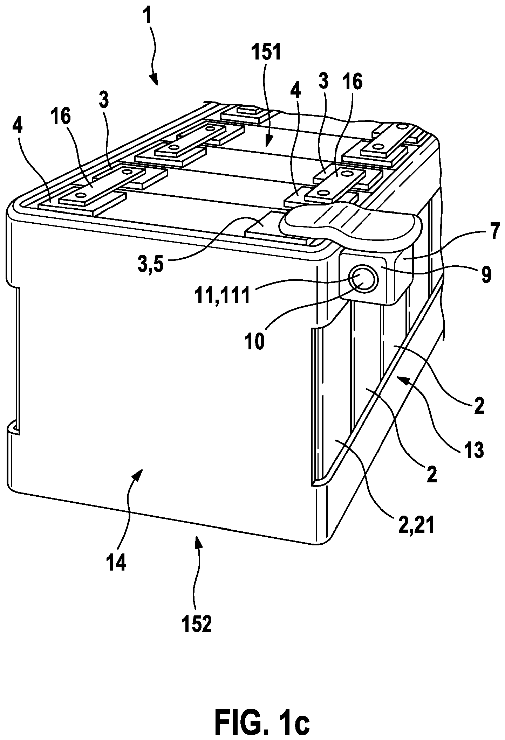

Die in der Figur 1c gezeigte Ausführungsform ist vorteilhaft, wenn das Batteriemodul 1 mit einer Stirnfläche 14 benachbart zu einer Stirnfläche 14 eines anderen Batteriemoduls 1 angeordnet wird. Dabei ist das erste Modulverbindungselement 7 an einer Seitenfläche 13 angeordnet. Weiterhin kann in einem solchen Fall das Modulverbindungselement 7 auch an der Batteriemoduloberseite 151 oder der Batteriemodulunterseite 152 angeordnet sein, was hier nicht gezeigt ist.

Wie in den Figuren 1a bis 1c zu erkennen ist, ist der Verbindungsabschnitt 10 des ersten Modulverbindungselements 7 als eine Öffnung 111 ausgebildet, welche insbesondere auch durch das Gehäuse 9 des ersten Modulverbindungselements 7 durchgehend verlaufend ausgebildet sein kann, worauf im Folgenden näher eingegangen wird.

Die Figur 2 zeigt schematisch eine Draufsicht auf eine erfindungsgemäße Batterie 100.

Die Batterie 100 weist ein erstes Batteriemodul 101 und ein zweites Batteriemodul 102 auf, welche jeweils wie bereits bei den Figuren 1a bis 1c beschrieben ist, eine Mehrzahl an Batteriezellen 2 aufweisen.

Die Batteriezellen 2 des ersten Batteriemoduls 101 und die Batteriezellen 2 des zweiten Batteriemoduls 102 sind jeweils elektrisch seriell mittels Zellverbindern 16 miteinander verbunden. Dabei ist ein positiver Spannungsabgriff 3 einer Batteriezelle 2 mit einem negativen Spannungsabgriff 4 einer benachbarten Batteriezelle 2 elektrisch leitend verbunden. Es ist auch denkbar, dass die Batteriezellen 2 elektrisch parallel miteinander verbunden sind.
Weiterhin ist der positive Spannungsabgriff 3 der ersten Batteriezelle 21 des ersten Batteriemoduls 101 nicht elektrisch leitend mit dem Spannungsabgriff 3, 4 einer benachbarten Batteriezelle 2 des ersten Batteriemoduls 101 elektrisch leitend verbunden und bildet somit den positiven Spannungsabgriff 5 des ersten Batteriemoduls 101. Der negative Spannungsabgriff 4 der letzten Batteriezelle 22 des ersten Batteriemoduls 101 ist nicht elektrisch leitend mit dem Spannungsabgriff 3, 4 einer benachbarten Batteriezelle 2 des ersten Batteriemoduls 101 elektrisch leitend verbunden und bildet somit den negativen Spannungsabgriff 6 des ersten Batteriemoduls 102.
Des Weiteren ist der negative Spannungsabgriff 4 der letzten Batteriezelle 22 des zweiten Batteriemoduls 102 nicht elektrisch leitend mit dem Spannungsabgriff 3, 4 einer benachbarten Batteriezellen 2 des zweiten Batteriemoduls 102 verbunden und bildet somit dem negativen Spannungsabgriff 6 des zweiten Batteriemoduls 102. Der positive Spannungsabgriff 3 der ersten Batteriezelle 21 des zweiten Batteriemoduls 102 ist nicht elektrisch leitend mit dem Spannungsabgriff 3, 4 einer benachbarten Batteriezelle 2 des zweiten Batteriemoduls 102 verbunden und bildet somit den positiven Spannungsabgriff 5 des zweiten Batteriemoduls 102.

Weiterhin ist aus der Figur 2 zu erkennen, dass mit dem positiven Spannungsabgriff 5 des ersten Batteriemoduls 101 das erste Modulverbindungselement 7 elektrisch leitend verbunden ist und mit dem negativen Spannungsabgriff 6 des zweiten Batteriemoduls 102 das zweite Modulverbindungselement 8 elektrisch leitend verbunden ist.

Das erste Batteriemodul 101 ist mit einer ersten Stirnfläche 141 benachbart zu einer zweiten Stirnfläche 142 des zweiten Batteriemoduls 102 angeordnet. Das erste Modulverbindungselement 7 und das zweite Modulverbindungselement 8 sind jeweils an einer Seitenfläche 13 des ersten Batteriemoduls 101 bzw. des zweiten Batteriemoduls 102 angeordnet. Dabei sind das erste Modulverbindungselement 7 und das zweite Modulverbindungselement 8 elektrisch leitend miteinander verbunden, wobei die elektrisch leitende Verbindung der Modulverbindungselemente 7,8 als Steckverbindung ausgebildet ist.

Die Figuren 3a und 3b zeigen jeweils schematisch Ausführungsformen einer als Steckverbindung ausgebildeten elektrisch leitenden Verbindung des ersten Modulverbindungselements 7 und des zweiten Modulverbindungselements 8 gemäß dem in Figur 2 gezeigten Schnitt A-A.

Die Figur 3a zeigt eine erste Ausführungsform, bei welcher die Modulverbindungselemente 7,8 direkt elektrisch leitend miteinander verbunden sind.
Dabei weisen das erste Modulverbindungselement 7 und das zweite Modulverbindungselement 8 jeweils ein Gehäuse 9 aus einem elektrisch isolierenden Material auf.
Das erste Modulverbindungselement 7 umfasst weiterhin einen ersten Verbindungsabschnitt 11, welcher aus einem elektrisch leitenden Material ausgebildet ist und zudem elektrisch leitend mit dem positiven Spannungsabgriff 5 des ersten Batteriemoduls 101 verbunden ist. Der erste Verbindungsabschnitt 11 umfasst gemäß Figur 3a eine Öffnung 111.
Das zweite Modulverbindungselement 8 umfasst einen zweiten Verbindungsabschnitt 12, welcher aus einem elektrisch leitenden Material ausgebildet ist und zudem elektrisch leitend mit dem negativen Spannungsabgriff 6 des zweiten Batteriemoduls 102 verbunden ist. Der zweite Verbindungsabschnitt 12 umfasst gemäß Figur 3a einen aus dem Gehäuse 9 ragenden Vorsprung 112, welcher als Steckelement dient.
Zur Ausbildung einer elektrisch leitenden Verbindung zwischen dem ersten Verbindungsabschnitt 11 und dem zweiten Verbindungsabschnitt 12 ist der Vorsprung 112 derart in die Öffnung 111 gesteckt, dass durch eine Kontaktierung zwischen dem ersten Verbindungsabschnitt 11 und dem zweiten Verbindungsabschnitt 12 eine elektrisch leitende Verbindung ausgebildet ist.

Die Figur 3b zeigt eine zweite Ausführungsform, bei welcher ein weiteres elektrisch leitendes Verbindungselement 20 die Modulverbindungselemente 7, 8 elektrisch leitend miteinander verbindet.
Dabei weisen das erste Modulverbindungselement 7 und das zweite Modulverbindungelement 8 jeweils ein Gehäuse 9 aus einem elektrisch isolierenden Material auf.
Das erste Modulverbindungselement 7 umfasst weiterhin den ersten Verbindungsabschnitt 11, welcher aus einem elektrisch leitenden Material ausgebildet ist und zudem elektrisch leitend mit dem positiven Spannungsabgriff 5 des ersten Batteriemoduls 101 verbunden ist. Der erste Verbindungsabschnitt 11 umfasst gemäß Figur 3b eine Öffnung 111.
Das zweite Modulverbindungselement 8 umfasst weiterhin den zweiten Verbindungsabschnitt 12, welcher aus einem elektrisch leitenden Material ausgebildet ist und zudem elektrisch leitend mit dem negativen Spannungsabgriff 6 des zweiten Batteriemoduls 102 verbunden ist. Der zweite Verbindungsabschnitt 12 umfasst gemäß Figur 3b eine durch das Gehäuse 9 des zweiten Modulverbindungselements 8 durchgehend verlaufende Öffnung 113. Das weitere elektrisch leitende Verbindungselement 20 verbindet den ersten Verbindungsabschnitt 11 und den zweiten Verbindungsabschnitts 12 elektrisch leitend. Dabei ist das weitere elektrisch leitende Verbindungselement 20 in der Öffnung 111 des ersten Verbindungsabschnitts 11 angeordnet und in der Öffnung 113 des zweiten Verbindungsabschnitts 12 angeordnet.
Die Ausbildung des zweiten Verbindungsabschnitts 12 als durch das Gehäuse 9 durchgehend verlaufende Öffnung 113 hat insbesondere den Vorteil, dass das erste Batteriemodul 101 und das zweite Batteriemodul 102 nebeneinander angeordnet werden können, ohne eine elektrisch leitende Verbindung zwischen dem ersten Verbindungsabschnitt 11 und dem zweiten Verbindungsabschnitt 12 auszubilden. Die Ausbildung der elektrisch leitenden Verbindung kann dann in einem weiteren Schritt erfolgen, da das weitere elektrisch leitende Verbindungselement 20 in der gezeigten Richtung 21 eingeschoben werden kann.
Weiterhin ist es selbstverständlich möglich, dass der erste Verbindungsabschnitt 11 auch als eine durch das Gehäuse 9 des ersten Verbindungselements 7 durchgehend verlaufende Öffnung ausgebildet ist, sodass ein Einschieben auch entgegen der gezeigten Richtung 21 möglich ist.

Um bei der Anordnung des ersten Batteriemoduls 101 neben dem zweiten Batteriemodul 102 zu verhindern, dass eine elektrisch leitende Verbindung zwischen dem ersten Verbindungsabschnitt 11 und dem zweiten Verbindungsabschnitt 12 ausgebildet wird, bevor das weitere elektrisch leitende Verbindungselement 20 eingesteckt wird, kann zwischen dem ersten Modulverbindungselement 7 und dem zweiten Modulverbindungselement 8 ein Isolationselement 21 angeordnet sein, welches zu einer elektrischen Isolierung dient und unerwünschte Kontaktierungen verhindert.

## Patentansprüche

1. Batterie aufweisend zumindest zwei Batteriemodule (1, 101, 102), wobei ein Batteriemodul (1, 101, 102) jeweils eine Mehrzahl an elektrisch seriell und/oder parallel miteinander verschalteten Batteriezellen (2), insbesondere Lithium-Ionen-Batteriezellen, umfasst und weiterhin einen positiven Spannungsabgriff (5) und einen negativen Spannungsabgriff (6) aufweist, wobei
mit dem positiven Spannungsabgriff (5) ein erstes Modulverbindungselement (7) elektrisch leitend verbunden ist und/oder mit dem negativen Spannungsabgriff (6) ein zweites Modulverbindungselement (8) elektrisch leitend verbunden ist, wobei ein Modulverbindungselement (7, 8) eines ersten Batteriemoduls (101) und ein Modulverbindungselement (7, 8) eines zweiten Batteriemoduls (102) elektrisch leitend verbunden sind, wobei
die elektrisch leitende Verbindung der Modulverbindungselemente (7, 8) als Steckverbindung ausgebildet ist, wobei
ein Batteriemodul (1, 101, 102) jeweils im Wesentlichen zwei sich einander gegenüberliegende Stirnflächen (14), zwei sich einander gegenüberliegende Seitenflächen (13) und eine zu einer Batteriemoduloberseite (151) gegenüberliegende Batteriemodulunterseite (152) aufweist, wobei
der positive Spannungsabgriff (5) und/oder der negative Spannungsabgriff (6) des Batteriemoduls (1, 101, 102) an der Batteriemoduloberseite (151) angeordnet sind,
wobei
das erste Batteriemodul (101) und das zweite Batteriemodul (102) nebeneinander angeordnet sind und eine der zwei Stirnflächen (14) des ersten Batteriemoduls (101) direkt benachbart zu einer der zwei Stirnflächen (14) des zweiten Batteriemoduls (102) angeordnet ist, und das erste Modulverbindungselement (7) und/oder das zweite Modulverbindungselement (8) an einer Seitenfläche (13) angeordnet sind oder dass
das erste Batteriemodul (101) und das zweite Batteriemodul (102) nebeneinander angeordnet sind und eine der zwei Seitenflächen (13) des ersten Batteriemoduls (101) direkt benachbart zu einer der zwei Seitenflächen (13) des zweiten Batteriemoduls (102) angeordnet ist, und das erste Modulverbindungselement (7) und/oder das zweite Modulverbindungselement (8) an einer Stirnfläche (14) angeordnet sind,
wobei
ein Modulverbindungelement (7, 8) jeweils ein aus einem elektrisch isolierenden Material ausgebildetes Gehäuse (9) umfasst, in welchem ein elektrisch leitender Verbindungsabschnitt (10, 11, 12) angeordnet ist, welcher weiterhin elektrisch leitend mit dem positiven Spannungsabgriff (5) oder dem negativen Spannungsabgriff (6) des jeweiligen Batteriemoduls (1, 101, 102) verbunden ist, wobei zu einer elektrisch leitenden Verbindung des ersten Batteriemoduls (101) und des zweiten Batteriemoduls (102) ein erster Verbindungsabschnitt (11) des Modulverbindungselements (7) des ersten Batteriemoduls (101) und ein zweiter Verbindungsabschnitt (12) des Modulverbindungselements (8) des zweiten Batteriemoduls (102) elektrisch leitend miteinander verbunden sind, **dadurch gekennzeichnet, dass**
zu einer direkten elektrisch leitenden Verbindung der erste Verbindungsabschnitt (11) eine Öffnung (111) aufweist, in welcher der als ein Steckelement (112) ausgebildete zweite Verbindungsabschnitt (12) angeordnet ist, oder dass
der erste Verbindungsabschnitt (11) eine Öffnung (111) aufweist und der zweite Verbindungsabschnitt (12) eine durch das Gehäuse (9) des den zweiten Verbindungsabschnitt (12) aufweisenden Modulverbindungselements (8) durchgehend verlaufende Öffnung (113) aufweist, wobei ein weiteres elektrisch leitendes Verbindungselement (20) in der Öffnung (111) des ersten Verbindungsabschnitts (11) und in der Öffnung (113) des zweiten Verbindungsabschnitts (12) verlaufend angeordnet ist.

2. Batterie nach dem vorhergehenden Anspruch 1, **dadurch gekennzeichnet, dass** zu einer seriellen Verschaltung des ersten Batteriemoduls (101) und des zweiten Batteriemoduls (102) das erste Modulverbindungselement (7) des ersten Batteriemoduls (101) und das zweite Modulverbindungselement (8) des zweiten Batteriemoduls (102) elektrisch leitend verbunden sind oder das zweite Modulverbindungselement (8) des ersten Batteriemoduls (101) und das erste Modulverbindungselement (7) des zweiten Batteriemoduls (102) elektrisch leitend verbunden sind oder dass zu einer parallelen Verschaltung des ersten Batteriemoduls (101) und des zweiten Batteriemoduls (102) das erste Modulverbindungselement (7) des ersten Batteriemoduls (101) und das erste Modulverbindungselement (7) des zweiten Batteriemoduls (102) elektrisch leitend verbunden sind oder das zweite Modulverbindungselement (8) des ersten Batteriemoduls (101) und das zweite Modulverbindungselement (8) des zweiten Batteriemoduls (102) elektrisch leitend verbunden sind.

3. Batterie nach einem der vorhergehenden Ansprüche, **dadurch gekennzeichnet** das Modulverbindungselement (7, 8) stoffschlüssig oder formschlüssig mit dem jeweiligen Batteriemodul (1, 101, 102) verbunden ist, insbesondere geschweißt, genietet, geklebt oder eingerastet mit dem jeweiligen Batteriemodul (1, 101, 102) verbunden ist.

4. Verfahren zur Herstellung einer Batterie (100) nach einem der vorgehenden Ansprüche aufweisend folgende Verfahrensschritte:
a) Elektrisch serielle und/oder parallele Verschaltung einer Mehrzahl an Batteriezellen (2), insbesondere Lithium-Ionen-Batteriezellen, zu einem ersten Batteriemodul (101) und zu einem zweiten Batteriemodul (102), wobei ein Batteriemodul (1, 101, 102) jeweils im Wesentlichen zwei sich einander gegenüberliegende Stirnflächen (14), zwei sich einander gegenüberliegende Seitenflächen (13) und eine zu einer Batteriemoduloberseite (151) gegenüberliegende Batteriemodulunterseite (152) aufweist,
b) Anordnung eines elektrisch leitend mit dem positiven Spannungsabgriff (5) verbundenen ersten Modulverbindungselements (7) und/oder eines elektrisch leitend mit dem negativen Spannungsabgriff (6) verbundenen zweiten Modulverbindungselements (8) an dem ersten Batteriemodul (101) und an dem zweiten Batteriemodul (102), wobei der positive Spannungsabgriff (5) und/oder der negative Spannungsabgriff (6) des Batteriemoduls (1, 101, 102) an der Batteriemoduloberseite (151) angeordnet sind,
c) Ausbildung einer elektrisch leitenden Verbindung zwischen dem Modulverbindungselement (7, 8) des ersten Batteriemoduls (101) und dem Modulverbindungselement (7, 8) des zweiten Batteriemoduls (102), wobei die elektrisch leitende Verbindung der Modulverbindungselemente (7, 8) als Steckverbindung ausgebildet wird, wobei
das erste Batteriemodul (101) und das zweite Batteriemodul (102) nebeneinander angeordnet werden und eine der zwei Stirnflächen (14) des ersten Batteriemoduls (101) direkt benachbart zu einer der zwei Stirnflächen (14) des zweiten Batteriemoduls (102) angeordnet wird, und das erste Modulverbindungselement (7) und/oder das zweite Modulverbindungselement (8) an einer Seitenfläche (13) angeordnet werden oder dass
das erste Batteriemodul (101) und das zweite Batteriemodul (102) nebeneinander angeordnet sind und eine der zwei Seitenflächen (13) des ersten Batteriemoduls (101) direkt benachbart zu einer der zwei Seitenflächen (13) des zweiten Batteriemoduls (102) angeordnet ist, und das erste Modulverbindungselement (7) und/oder das zweite Modulverbindungselement (8) an einer Stirnfläche (14) angeordnet sind, **gekennzeichnet, dadurch, dass**
ein Modulverbindungelement (7, 8) jeweils ein aus einem elektrisch isolierenden Material ausgebildetes Gehäuse (9) umfasst, in welchem ein elektrisch leitender Verbindungsabschnitt (10, 11, 12) angeordnet ist, welcher weiterhin elektrisch leitend mit dem positiven Spannungsabgriff (5) oder dem negativen Spannungsabgriff (6) des jeweiligen Batteriemoduls (1, 101, 102) verbunden wird, wobei zu einer elektrisch leitenden Verbindung des ersten Batteriemoduls (101) und des zweiten Batteriemoduls (102) ein erster Verbindungsabschnitt (11) des Modulverbindungselements (7) des ersten Batteriemoduls (101) und ein zweiter Verbindungsabschnitt (12) des Modulverbindungselements (8) des zweiten Batteriemoduls (102) elektrisch leitend miteinander verbunden werden, und zu einer direkten elektrisch leitenden Verbindung der erste Verbindungsabschnitt (11) eine Öffnung (111) aufweist, in welcher der als ein Steckelement (112) ausgebildete zweite Verbindungsabschnitt (12) angeordnet wird, oder dass
der erste Verbindungsabschnitt (11) eine Öffnung (111) aufweist und der zweite Verbindungsabschnitt (12) eine durch das Gehäuse (9) des den zweiten Verbindungsabschnitt (12) aufweisenden Modulverbindungseiements (8) durchgehend verlaufende Öffnung (113) aufweist, wobei ein weiteres elektrisch leitendes Verbindungselement (20) in der Öffnung (111) des ersten Verbindungsabschnitts (11) und in der Öffnung (113) des zweiten Verbindungsabschnitts (12) verlaufend angeordnet wird.

## Claims

1. Battery having at least two battery modules (1, 101, 102), wherein a battery module (1, 101, 102) comprises, respectively, a plurality of battery cells (2), in particular lithium-ion battery cells that are interconnected electrically in series and/or in parallel, and in addition has a positive voltage tap (5) and a negative voltage tap (6), wherein
a first module connecting element (7) is connected in an electrically conductive manner to the positive voltage tap (5), and/or a second module connecting element (8) is connected in an electrically conductive manner to the negative voltage tap (6), wherein a module connecting element (7, 8) of a first battery module (101) and a module connecting element (7, 8) of a second battery module (102) are connected in an electrically conductive manner, wherein
the electrically conductive connection of the module connecting elements (7, 8) is realized as a plug-in connection, wherein
a battery module (1, 101, 102) in each case has substantially two mutually opposite end faces (14), two mutually opposite side faces (13), and one battery-module underside (152) that is opposite one battery-module upper side (151), wherein
the positive voltage tap (5) and/or the negative voltage tap (6) of the battery module (1, 101, 102) are/is arranged on the battery-module upper side (151), wherein the first battery module (101) and the second battery module (102) are arranged next to each other, and one of the two end faces (14) of the first battery module (101) is arranged directly adjacently to one of the two end faces (14) of the second battery module (102), and the first module connecting element (7) and/or the second module connecting element (8) are/is arranged on a side face (13), or in that
the first battery module (101) and the second battery module (102) are arranged next to each other, and one of the two side faces (13) of the first battery module (101) is arranged directly adjacently to one of the two side faces (13) of the second battery module (102), and the first module connecting element (7) and/or the second module connecting element (8) are/is arranged on an end face (14), wherein
a module connecting element (7, 8) in each case comprises a housing (9), composed of an electrically insulating material, arranged in which is an electrically conductive connecting portion (10, 11, 12) that is additionally connected in an electrically conductive manner to the positive voltage tap (5) or to the negative voltage tap (6) of the respective battery module (1, 101, 102), wherein, for the purpose of connecting the first battery module (101) and the second battery module (102) in an electrically conductive manner, a first connecting portion (11) of the module connecting element (7) of the first battery module (101) and a second connecting portion (12) of the module connecting element (8) of the second battery module (102) are connected to each other in an electrically conductive manner, **characterized in that**,
for the purpose of direct electrically conductive connection, the first connecting portion (11) has an opening (111), in which the second connecting portion (12), realized as a plug-in element (112), is arranged, or **in that**
the first connecting portion (11) has an opening (111), and the second connecting portion (12) has an opening (113) that extends continuously through the housing (9) of the module connecting element (8) having the second connecting portion (12), wherein a further electrically conductive connecting element (20) is arranged such that it extends in the opening (111) of the first connecting portion (11) and in the opening (113) of the second connecting portion (12).

2. Battery according to the preceding Claim 1, **characterized in that**, for the purpose of interconnecting the first battery module (101) and the second battery module (102) in series, the first module connecting element (7) of the first battery module (101) and the second module connecting element (8) of the second battery module (102) are connected in an electrically conductive manner, or the second module connecting element (8) of the first battery module (101) and the first module connecting element (7) of the second battery module (102) are connected in an electrically conductive manner, or, for the purpose of interconnecting the first battery module (101) and the second battery module (102) in parallel, the first module connecting element (7) of the first battery module (101) and the first module connecting element (7) of the second battery module (102) are connected in an electrically conductive manner, or the second module connecting element (8) of the first battery module (101) and the second module connecting element (8) of the second battery module (102) are connected in an electrically conductive manner.

3. Battery according to either of the preceding claims, **characterized in that** the module connecting element (7, 8) is connected to the respective battery module (1, 101, 102) in a materially bonded or form-fitting manner, in particular is connected to the respective battery module (1, 101, 102) in a welded, riveted, bonded or latched-in manner.

4. Method for producing a battery (100) according to any one of the preceding claims, having the following method steps:
a) electrically interconnecting a plurality of battery cells (2), in particular lithium-ion battery cells, in series and/or in parallel to form a first battery module (101) and to form a second battery module (102), wherein a battery module (1, 101, 102) in each case has substantially two mutually opposite end faces (14), two mutually opposite side faces (13), and one battery-module underside (152) that is opposite one battery-module upper side (151),
b) arranging a first module connecting element (7), connected to the positive voltage tap (5) in an electrically conductive manner, and/or a second module connecting element (8), connected to the negative voltage tap (6) in an electrically conductive manner, on the first battery module (101) and on the second battery module (102), wherein the positive voltage tap (5) and/or the negative voltage tap (6) of the battery module (1, 101, 102) are/is arranged on the battery-module upper side (151),
c) realizing an electrically conductive connection between the module connecting element (7, 8) of the first battery module (101) and the module connecting element (7, 8) of the second battery module (102), wherein the electrically conductive connection of the module connecting elements (7, 8) is realized as a plug-in connection, wherein
the first battery module (101) and the second battery module (102) are arranged next to each other, and one of the two end faces (14) of the first battery module (101) is arranged directly adjacently to one of the two end faces (14) of the second battery module (102), and the first module connecting element (7) and/or the second module connecting element (8) are/is arranged on a side face (13), or in that
the first battery module (101) and the second battery module (102) are arranged next to each other, and one of the two side faces (13) of the first battery module (101) is arranged directly adjacently to one of the two side faces (13) of the second battery module (102), and the first module connecting element (7) and/or the second module connecting element (8) are/is arranged on an end face (14),
**characterized in that**
a module connecting element (7, 8) in each case comprises a housing (9), composed of an electrically insulating material, arranged in which is an electrically conductive connecting portion (10, 11, 12) that is additionally connected in an electrically conductive manner to the positive voltage tap (5) or to the negative voltage tap (6) of the respective battery module (1, 101, 102), wherein, for the purpose of connecting the first battery module (101) and the second battery module (102) in an electrically conductive manner, a first connecting portion (11) of the module connecting element (7) of the first battery module (101) and a second connecting portion (12) of the module connecting element (8) of the second battery module (102) are connected to each other in an electrically conductive manner, and, for the purpose of direct electrically conductive connection, the first connecting portion (11) has an opening (111), in which the second connecting portion (12), realized as a plug-in element (112), is arranged, or **in that** the first connecting portion (11) has an opening (111),
and the second connecting portion (12) has an opening (113) that extends continuously through the housing (9) of the module connecting element (8) having the second connecting portion (12), wherein a further electrically conductive connecting element (20) is arranged such that it extends in the opening (111) of the first connecting portion (11) and in the opening (113) of the second connecting portion (12).

## Revendications

1. Batterie comprenant au moins deux modules de batterie (1, 101, 102), dans laquelle
un module de batterie (1, 101, 102) comporte respectivement une pluralité d'éléments de batterie (2) connectés électriquement les uns aux autres en série et/ou en parallèle, en particulier des éléments de batterie lithium-ion, et comprend en outre une prise de tension positive (5) et une prise de tension négative (6), dans laquelle
un premier élément de connexion de module (7) est connecté de manière électroconductrice à la prise de tension positive (5) et/ou un deuxième élément de connexion de module (8) est connecté de manière électroconductrice à la prise de tension négative (6), dans laquelle
un élément de connexion de module (7, 8) d'un premier module de batterie (101) et un élément de connexion de module (7, 8) d'un deuxième module de batterie (102) sont connectés de manière électroconductrice, dans laquelle la connexion électroconductrice des éléments de connexion de module (7, 8) est réalisée sous forme de connexion enfichable, dans laquelle
un module de batterie (1, 101, 102) comprend respectivement essentiellement deux surfaces frontales (14) opposées l'une à l'autre, deux surfaces latérales (13) opposées l'une à l'autre et un côté inférieur de module de batterie (152) opposé à un côté supérieur de module de batterie (151), dans laquelle
la prise de tension positive (5) et/ou la prise de tension négative (6) du module de batterie (1, 101, 102) sont disposées sur le côté supérieur de module de batterie (151), dans laquelle
le premier module de batterie (101) et le deuxième module de batterie (102) sont disposés l'un à côté de l'autre et l'une des deux surfaces frontales (14) du premier module de batterie (101) est disposée de manière immédiatement adjacente à l'une des deux surfaces frontales (14) du deuxième module de batterie (102), et le premier élément de connexion de module (7) et/ou le deuxième élément de connexion de module (8) sont disposés sur une surface latérale (13), ou en ce que
le premier module de batterie (101) et le deuxième module de batterie (102) sont disposés l'un à côté de l'autre et l'une des deux surfaces latérales (13) du premier module de batterie (101) est disposée de manière immédiatement adjacente à l'une des deux surfaces latérales (13) du deuxième module de batterie (102), et le premier élément de connexion de module (7) et/ou le deuxième élément de connexion de module (8) sont disposés sur une surface frontale (14), dans laquelle
un élément de connexion de module (7, 8) comporte respectivement un boîtier (9) réalisé à partir d'un matériau électriquement isolant, boîtier dans lequel une partie de connexion électroconductrice (10, 11, 12) est disposée, laquelle est en outre connectée de manière électroconductrice à la prise de tension positive (5) ou à la prise de tension négative (6) du module de batterie (1, 101, 102) respectif, dans laquelle, en vue d'une connexion électroconductrice du premier module de batterie (101) et du deuxième module de batterie (102), une première partie de connexion (11) de l'élément de connexion de module (7) du premier module de batterie (101) et une deuxième partie de connexion (12) de l'élément de connexion de module (8) du deuxième module de batterie (102) sont connectées électriquement l'une à l'autre, **caractérisée en ce**
**qu'**en vue d'une connexion électroconductrice directe, la première partie de connexion (11) comprend une ouverture (111) dans laquelle la deuxième partie de connexion (12) réalisée sous forme d'élément enfichable (112) est disposée ou en ce que
la première partie de connexion (11) comprend une ouverture (111) et la deuxième partie de connexion (12) comprend une ouverture (113) s'étendant de manière continue à travers le boîtier (9) de l'élément de connexion de module (8) comprenant la deuxième partie de connexion (12), un autre élément de connexion électroconducteur (20) étant disposé de manière à s'étendre dans l'ouverture (111) de la première partie de connexion (11) et dans l'ouverture (113) de la deuxième partie de connexion (12).

2. Batterie selon la revendication précédente 1, **caractérisée en ce qu'**en vue d'une connexion en série du premier module de batterie (101) et du deuxième module de batterie (102), le premier élément de connexion de module (7) du premier module de batterie (101) et le deuxième élément de connexion de module (8) du deuxième module de batterie (102) sont connectés de manière électroconductrice ou le deuxième élément de connexion de module (8) du premier module de batterie (101) et le premier élément de connexion de module (7) du deuxième module de batterie (102) sont connectés de manière électroconductrice, ou **en ce qu'**en vue d'une connexion en parallèle du premier module de batterie (101) et du deuxième module de batterie (102), le premier élément de connexion de module (7) du premier module de batterie (101) et le premier élément de connexion de module (7) du deuxième module de batterie (102) sont connectés de manière électroconductrice ou le deuxième élément de connexion de module (8) du premier module de batterie (101) et le deuxième élément de connexion de module (8) du deuxième module de batterie (102) sont connectés de manière électroconductrice.

3. Batterie selon l'une des revendications précédentes, **caractérisée en ce que** l'élément de connexion de module (7, 8) est connecté au module de batterie (1, 101, 102) respectif par liaison de matière ou par complémentarité de forme, en particulier est soudé, rivé, collé ou encliqueté avec le module de batterie (1, 101, 102) respectif.

4. Procédé de production d'une batterie (100) selon l'une des revendications précédentes, comprenant les étapes de procédé suivantes :
a) connexion électrique en série et/ou en parallèle d'une pluralité d'éléments de batterie (2), en particulier d'éléments de batterie lithium-ion, pour former un premier module de batterie (101) et pour former un deuxième module batterie (102), dans lequel un module de batterie (1, 101, 102) comprend respectivement essentiellement deux surfaces frontales (14) opposées l'une à l'autre, deux surfaces latérales (13) opposées l'une à l'autre et un côté inférieur de module de batterie (152) opposé à un côté supérieur de module de batterie (151) ,
b) disposition d'un premier élément de connexion de module (7) connecté de manière électroconductrice à la prise de tension positive (5) et/ou d'un deuxième élément de connexion de module (8) connecté de manière électroconductrice à la prise de tension négative (6) sur le premier module de batterie (101) et sur le deuxième module de batterie (102), dans lequel la prise de tension positive (5) et/ou la prise de tension négative (6) du module de batterie (1, 101, 102) sont disposées sur le côté supérieur de module de batterie (151),
c) réalisation d'une connexion électroconductrice entre l'élément de connexion de module (7, 8) du premier module de batterie (101) et l'élément de connexion de module (7, 8) du deuxième module batterie (102), dans lequel la connexion électroconductrice des éléments de connexion de module (7, 8) est réalisée sous forme de connexion enfichable, dans lequel
le premier module de batterie (101) et le deuxième module de batterie (102) sont disposés l'un à côté de l'autre et l'une des deux surfaces frontales (14) du premier module de batterie (101) est disposée de manière immédiatement adjacente à l'une des deux surfaces frontales (14) du deuxième module de batterie (102), et le premier élément de connexion de module (7) et/ou le deuxième élément de connexion de module (8) sont disposés sur une surface latérale (13), ou en ce que
le premier module de batterie (101) et le deuxième module de batterie (102) sont disposés l'un à côté de l'autre et l'une des deux surfaces latérales (13) du premier module de batterie (101) est disposée de manière immédiatement adjacente à l'une des deux surfaces latérales (13) du deuxième module de batterie (102), et le premier élément de connexion de module (7) et/ou le deuxième élément de connexion de module (8) sont disposés sur une surface frontale (14),
**caractérisé en ce**
**qu'**un élément de connexion de module (7, 8) comporte respectivement un boîtier (9) réalisé à partir d'un matériau électriquement isolant, boîtier dans lequel une partie de connexion électroconductrice (10, 11, 12) est disposée, laquelle est en outre connectée de manière électroconductrice à la prise de tension positive (5) ou à la prise de tension négative (6) du module de batterie (1, 101, 102) respectif, et, en vue d'une connexion électroconductrice du premier module de batterie (101) et du deuxième module de batterie (102), une première partie de connexion (11) de l'élément de connexion de module (7) du premier module de batterie (101) et une deuxième partie de connexion (12) de l'élément de connexion de module (8) du deuxième module de batterie (102) étant connectées électriquement l'une à l'autre, et en vue d'une connexion électroconductrice directe, la première partie de connexion (11) comprenant une ouverture (111) dans laquelle la deuxième partie de connexion (12) réalisée sous forme d'élément enfichable (112) est disposée, ou en ce que
la première partie de connexion (11) comprend une ouverture (111) et la deuxième partie de connexion (12) comprend une ouverture (113) s'étendant de manière continue à travers le boîtier (9) de l'élément de connexion de module (8) comprenant la deuxième partie de connexion (12), un autre élément de connexion électroconducteur (20) étant disposé de manière à s'étendre dans l'ouverture (111) de la première partie de connexion (11) et dans l'ouverture (113) de la deuxième partie de connexion (12).
